# EUROPEAN PATENT APPLICATION

(11) **EP 2 060 840 A2**
(43) Date of publication of application: **20.05.2009**
(21) Application number: 08019740.3
(22) Date of filing: 12.11.2008
(51) Int. Cl.: F16L 19/02, F16L 27/08

(54) **Orientable pipe connector for plastic pipes**

(30) Priority: 15.11.2007 IT MI20070382 U
(71) Applicant: Aquatechnik S.p.A., 20020 Magnago, Milan (IT)
(72) Inventor: Petena', Lino, 21052 Busto Arsizio Varese (IT)
(74) Representative: Coloberti, Luigi

(57) **Abstract**

An orientable pipe connector for plastic pipes and the like. The pipe connector comprises a tubular body (10) of plastic material defining a flow path (11) between a first (12) and at least a second end (13) for connection to pipes, pipe connectors and the like; at least one of the ends (13) of the pipe connector is provided with a bell-shaped portion (17) onto which a rotating locking ring (18) is snap-fitted. In this way, the locking ring (18) is allowed to freely rotate, but prevented from axially disengaging.

## Description

### BACKGROUND OF THE INVENTION

This invention refers to pipe connectors for plastic pipes and the like, and in particular, concerns a pipe connector made of plastic material, of any suitable type, shaped in such a way as to allow its angular orientation with respect to pipes and/or other pipe connectors to which it must be connected.

### PRIOR ART

Conventionally, when a system for conveying or distributing fluids under pressure has to be constructed, for example a central heating system, or a sanitary water or compressed air distributing system, use is made of pipes of plastic material, for example laminated plastic pipes, which must be connected by suitable elbow-shaped, "T"-shaped or otherwise shaped pipe connectors.

In general, a pipe connector comprises a tubular body of moulded plastic material, defining one or more flow paths between a first and at least a second end provided with screw threads and/or connecting end portions for connection to other pipe connectors and/or pipes during the construction of a system. A one-piece configuration of the pipe connector results in a limited possibility of orientating it during its assembly, or subsequently, or makes it difficult to connect pipes extending along complicated paths.

### OBJECTS OF THE INVENTION

The object of this invention is to provide a pipe connector for pipes of plastic material, laminated plastic material and the like, for the aforementioned uses, shaped in such a way as to allow any angular orientation of the pipe connector itself, both when it is being fitted onto a pipe, and subsequently.

### BRIEF DESCRIPTION OF THE INVENTION

The foregoing can be achieved by means of a pipe connector for pipes of plastic material, laminated plastic material or the like, for conveying fluids under pressure, in which the pipe connector comprises a tubular body of plastic material, defining a flow path between a first and at least a second end shaped in such a way as to enable a connection to pipes, pipe connectors and the like, characterised in that at least one of the ends of the pipe connector is provided with a bell-shaped portion, and in that a locking ring of plastic material, is snap-fitted onto the bell-shaped end portion of the pipe connector, said locking ring and said bell-shaped end portion of the pipe connector being provided with annular shoulder surfaces shaped in such a way as to allow a free rotation of the locking ring, and preventing it from axially disengaging.

### BRIEF DESCRIPTION OF THE DRAWINGS

The pipe connector can be of any suitable type, or shaped in any way whatsoever; several exemplificative embodiments are illustrated hereunder, with reference to the accompanying drawings, in which:
Fig. 1 shows a side view of an elbow-shaped pipe connector;
Fig. 2 shows a front view of the pipe connector of figure 1, illustrating one of its possible angular orientations;
Fig. 3 shows a longitudinal cross-sectional view along the line 3-3 of figure 2;
Fig. 4 shows an enlarged detail of figure 2, illustrating the coupling system between the locking ring and the bell-shaped end of the pipe connector;
Fig. 5 shows a front view of a "T"-shaped pipe connector provided with a rotatable ring according to the invention.

### DETAILED DESCRIPTION OF THE INVENTION

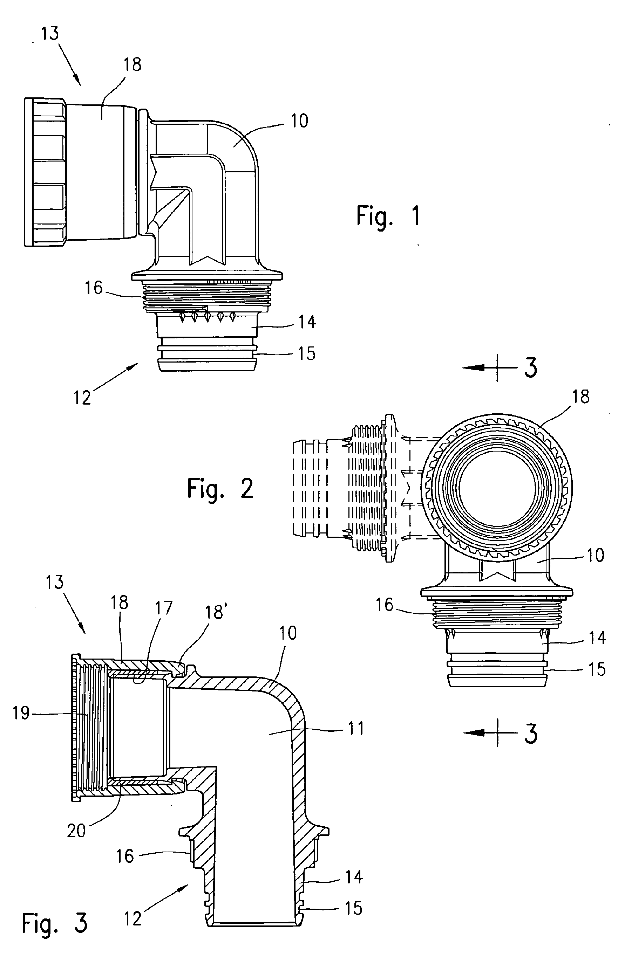

The example of figures 1 to 3 shows an elbow-shaped pipe connector of moulded plastic material, suitable for connection to the ends of pipes of plastic material, laminated plastic material or the like, or to other pipe connectors of the same type or of different types in the construction of systems for conveying fluids under pressure.

In the example shown, the pipe connector comprises an elbow-shaped tubular body 10 of plastic material, which defines a flow path 11 between a first end 12 of the pipe connector, and a second end 13, as shown.

In the case shown, the pipe connector is of the male/female type; the end 12 substantially consists of a connecting end portion 14 provided with annular grooves 15 for the insertion of annular gaskets, not shown, for forming a seal in a bell-shaped end of a plastic pipe or of other suitably shaped pipe connector element; rearwardly to the grooves 15, the end portion 14 is provided with a screw thread 16 onto which a locking ring can be screwed.

The body 10 of the pipe connector, as shown in the cross section of figure 3, at the end 13 is provided with a bell-shaped portion 17 onto which a rotating locking ring 18 is coupled, provided with an internal screw thread 19; an antifriction ring 20 is interposed between the bell-shaped portion 17 and the locking ring 18.

The locking ring 18 is snap-fitted onto the body 10 of the pipe connector, with the possibility of rotating freely, while on the contrary being prevented from axially disengaging; in this way, as shown by the broken line in figure 2, the locking ring 18 can be made to rotate to allow the connection, for example to the connecting end portion of another similar or differently shaped pipe connector, for connection to a pipe, or for other applications.

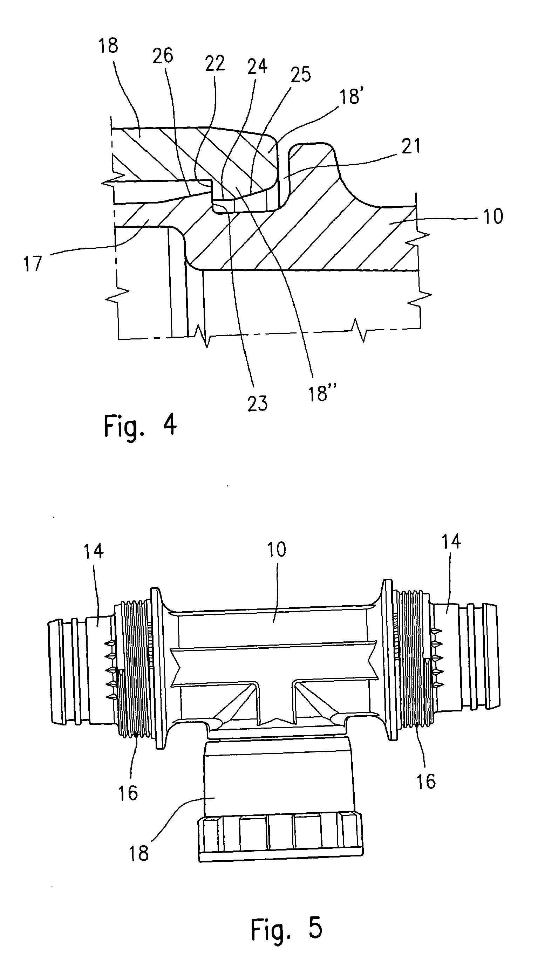

In this connection, as shown in the enlarged detail of figure 4, the rear end 18' of the locking ring 18 ends with an annular rib 18" which penetrates, with a certain clearance, into an annular groove 21 in the body 10, to the rear of the bell-shaped portion 17 of the body 10 of the pipe connector; in this way, the locking ring 18 is allowed to rotate freely, and the body 10 of the pipe connector can be angularly orientated in any direction.

At the same time, the locking ring 18 is prevented from axially disengaging by the contact between two annular shoulder surfaces, and precisely, the internal annular surface 22 on the rib 18'' of the locking ring 18, and the annular surface 23 inside the groove 21; both the annular surfaces 22 and 23 extend in a radial direction over a distance sufficient to allow their partial overlapping.

The body 10 of the pipe connector and the locking ring 18 are both made of moulded plastic material, having the necessary technical characteristics; therefore, the annular rib 18'' of the locking ring 18 and the corresponding bell-shaped end 17, in correspondence with the groove 21, are made with slanted guiding surfaces, which enable the locking ring 18 to be axially forced and snap-fitted, as a result of the slight elastic yielding of the plastic material.

More precisely, the rib 18'', on its internal side, starting from the radial shoulder 22 has a cylindrical surface 24, followed by a conical surface 25 which diverges towards the rear end of the locking ring 18 itself.

In turn, the bell-shaped portion 17, on its external side has a corresponding diverging conical surface 26 which ends in correspondence with the external edge of the annular shoulder 23. In this way the two conical surfaces 25 and 26 allow the axial sliding of the locking ring 18 at the time of assembly, elastically dilating it slightly to enable it to be snap-coupled into the annular groove 21.

Figure 5 shows, by way of example, a different type of pipe connector, for example a "T"-shaped pipe connector provided with two axially aligned connecting end portions 14 and an end provided with a rotating locking ring 18 according to this invention; consequently in figure 5 the same numerical references as in the preceding figures have been used to indicate similar or equivalent parts.

It is understood that what has been described and shown in the accompanying figures has been given purely by way of example; therefore, the pipe connector may be of any other type, or differently shaped, on condition that it is provided at one or more of its ends with a freely rotating locking ring, as previously described, without thereby departing from the scope of the claims.

## Claims

1. Pipe connector for pipes of plastic material, laminated plastic material or the like, for conveying fluids under pressure, in which the pipe connector comprises a tubular body (10) of plastic material, defining a flow path (11) between a first (12) and at least a second end (13) shaped in such a way as to enable a connection to pipes, pipe connectors and the like, **characterised in that** at least one of the ends (13) of the pipe connector is provided with a bell-shaped portion (17), and **in that** a locking ring (18) of plastic material is snap-fitted onto the bell-shaped end portion (17) of the pipe connector, said locking ring (18) and said bell-shaped end portion (17) of the pipe connector being provided with annular shoulder surfaces (22, 23) shaped in such a way as to allow a free rotation of the locking ring (18), and preventing it from axially disengaging.

2. Pipe connector according to claim 1, **characterised in that** the locking ring (18) has an annular rib (18'') shaped in such a way as to be snap-fitted into an annular groove (21) in the body (10) of the pipe connector, in a position to the rear of the bell-shaped end portion (17).

3. Pipe connector according to claim 2, **characterised in that** the annular rib (18") of the locking ring (18) and the annular groove (21) of the body (10) of the pipe connector, have radial shoulder surfaces (22, 23) which partially overlap one another.

4. Pipe connector according to claim 2, **characterised in that** the annular rib (18'') of the locking ring (18) and the body (10) of the pipe connector, close to the annular groove (21), have diverging conical surfaces (25, 26) shaped in such a way as to allow the axial snap-coupling of the annular rib (18'') of the locking ring (18) into the annular groove (21) in the body (10) of the pipe connector.

5. Pipe connector according to any one of the previous claims, **characterised in that** the locking ring (18) is provided with a screw thread (19) on an internal or external surface of the locking ring (18).

6. Pipe connector comprising a freely rotating locking ring (18) according to any one of the previous claims, on at least one of its ends, and a connecting end portion (14) for connection to a bell-shaped end of a pipe, or to a bell-shaped end of another pipe connector.
